# EUROPÄISCHE PATENTSCHRIFT

(11) **EP 2 954 960 B1**
(45) Veröffentlichungstag und Bekanntmachung des Hinweises auf die Patenterteilung: **07.08.2019**
(21) Anmeldenummer: 15001686.3
(22) Anmeldetag: 08.06.2015
(51) Int. Cl.: B08B 9/027, B08B 9/032, B01F 5/04, B01F 3/08, C11D 3/48, F04F 5/10, C02F 1/68, C02F 1/72

(54) **VORRICHTUNG ZUR DESINFEKTION UND REINIGUNG VON LEITUNGEN, INSBESONDERE VON TRINKWASSERLEITUNGEN, SOWIE VERFAHREN ZUR DESINFEKTION UND REINIGUNG SOLCHER LEITUNGEN**
DEVICE FOR DISINFECTING AND CLEANING CONDUITS, IN PARTICULAR POTABLE WATER CONDUITS, AND METHOD FOR DISINFECTING AND CLEANING SUCH CONDUITS
DISPOSITIF DE DÉSINFECTION ET DE NETTOYAGE DE TUYAUX, EN PARTICULIER DE CONDUITES D'EAU POTABLE ET PROCÉDÉ DE DÉSINFECTION ET DE NETTOYAGE DE TELLES CONDUITES

(30) Priorität: 10.06.2014 DE 102014008181
(43) Veröffentlichungstag der Anmeldung: 16.12.2015
(73) Patentinhaber: REMS GmbH & Co KG, 71332 Waiblingen (DE)
(72) Erfinder:
(74) Vertreter: Kohl, Karl-Heinz

(56) Entgegenhaltungen:
- WO-A1-2005/044968
- DE-A1-102006 060 204
- FR-A1- 2 732 333
- JP-A- H10 151 382
- JP-A- S62 250 190
- US-A- 3 726 304
- US-A- 4 691 732
- US-A- 5 730 178
- US-A- 5 827 434
- US-A1- 2002 145 282

## Beschreibung

Die Erfindung betrifft eine Vorrichtung zur Desinfektion und Reinigung von Leitungen, insbesondere von Trinkwasserleitungen, nach dem Oberbegriff des Anspruches 1 sowie ein Verfahren zur Desinfektion und/oder Reinigung von Leitungen, insbesondere Trinkwasserleitungen.

Das Dokument US5827434 A offenbart eine Vorrichtung zur Desinfektion und Reinigung von Leitungen gemäß dem Oberbegriff des Anspruchs 1.

In Trinkwasserinstallationen gefährden bakterielle (mikrobielle) Verunreinigungen (Kontaminationen) und Ablagerungen die Qualität des Trinkwassers. Als erster Schritt zur Beseitigung der Verunreinigungen werden die Trinkwasserleitungen mit Wasser, gegebenenfalls unter Zugabe intermittierender Druckluft (Druckluftstöße), gereinigt. Zusätzlich kann eine Behandlung der Trinkwasserleitungen mit einem Desinfektionsmittel erforderlich sein.

Bei der Installation bzw. beim Betrieb im Laufe der Jahre aufgetretene Kontaminationen der Trinkwasserinstallation werden mit Druckspülgeräten entfernt. Hierbei wird Wasser unter Druck durch die Trinkwasserleitungen gespült. Für eine zusätzliche Desinfektion und/oder Reinigung wird dem Spülwasser eine entsprechende Chemikalie zugegeben, die in bestimmter Konzentration dem Trinkwasser zugemischt wird. Nach einer gewissen Einwirkungszeit der Chemikalie wird das Trinkwasser mit der zugesetzten Chemikalie wieder ausgespült. Dabei werden während des Füllvorganges alle Entnahmestellen an der Trinkwasserinstallation nacheinander so lange geöffnet, bis die Desinfektionschemikalie an der jeweiligen Entnahmestelle austritt. Dann werden die jeweiligen Entnahmestellen geschlossen, so dass die im Trinkwasser enthaltene Chemikalie auf die Trinkwasserleitungen einwirken kann. Übliche Einwirkungszeiten liegen im Bereich bis zu 24 Stunden.

Nach der Einwirkungszeit werden die Entnahmestellen nacheinander so lange geöffnet, bis am auslaufenden Trinkwasser keine Desinfektionschemikalie mehr feststellbar ist.

Die Chemikalie befindet sich in einem Behältnis, das an einen Druckluftbehälter des Druckluftsprühgerätes angeschlossen ist. Zum Austrag der Chemikalie wird die Druckluft in das Behältnis eingeführt, wodurch die Chemikalie aus dem Behältnis über eine Leitung herausgedrückt wird. Die Zumischung der Chemikalie erfordert somit eine Druckluftquelle.

Weiter ist es für den Installateur schwierig festzustellen, wann an der geöffneten Entnahmestelle das Wasser mit der Chemikalie austritt, weil die üblicherweise eingesetzte Chemikalie farblos ist. Es kommt darum vor, dass der Installateur beim Desinfektions- oder Reinigungsvorgang die Entnahmestelle zu früh schließt, was eine ungenügende Desinfektion und Reinigung der Trinkwasserleitung zur Folge hat.

Der Erfindung liegt die Aufgabe zugrunde, die gattungsgemäße Vorrichtung und das gattungsgemäße Verfahren so auszubilden, dass eine problemlose und dennoch zuverlässige Desinfektion und Reinigung der Leitungen gewährleistet ist.

Diese Aufgabe wird bei der gattungsgemäßen Vorrichtung erfindungsgemäß mit den kennzeichnenden Merkmalen des Anspruches' 1 und beim gattungsgemäßen Verfahren erfindungsgemäß mit den Merkmalen des Anspruches 9 gelöst.

Die erfindungsgemäße Vorrichtung benötigt zum Austrag der im Behältnis befindlichen Chemikalie keine Druckluft, sondern verwendet hierfür das für die Reinigung der Leitungen ohnehin eingesetzte Wasser. Das Behältnis hat das Anschlussstück, das in den Strömungsquerschnitt der vom Wasser durchströmten Rohrkupplung ragt. Dadurch bildet sich in Strömungsrichtung vor dem Anschlussstück in der Rohrkupplung ein Staudruck. Er führt dazu, dass über die erste Leitung des Anschlussstückes ein Teil des Wassers in das Behältnis gedrückt wird. Auf die im Behältnis befindliche Chemikalie wirkt somit ein Druck, durch den sie in die zweite Leitung des Anschlussstückes gedrückt wird. Die Chemikalie tritt in Strömungsrichtung hinter dem Anschlussstück aus der zweiten Leitung aus und wird dem durch die Rohrkupplung strömenden Wasser zugegeben. Die Einheit benötigt somit zum Austrag der Chemikalie im Behältnis keine zusätzliche Druckquelle, so dass eine einfache Handhabung beim Desinfektions- und/oder Reinigungsvorgang erreicht wird.

Das Anschlussstück ragt mit einem Endteil in die Rohrkupplung. Ihr Querschnitt ist größer als der Querschnitt des Endteiles. Dadurch kann das Wasser am Endteil vorbei durch die Rohrkupplung strömen. Der Endteil des Anschlussstückes erzeugt den Staudruck.

Die einfache Handhabung wird dadurch erleichtert, dass das Anschlussstück mit einem Halterungsteil versehen ist, der auf einen Hals des Behältnisses aufsetzbar ist. Dadurch lässt sich das Behältnis, wenn es leer ist, einfach abnehmen und durch ein neues Behältnis ersetzen.

Bevorzugt ist der Halterungsteil lösbar mit dem Hals des Behältnisses verbunden, so dass ein einfacher Austausch gewährleistet ist.

Die Handhabung wird insbesondere dadurch erleichtert, dass der Halterungsteil des Anschlussstückes auf den Hals des Behältnisses aufschraubbar ist.

Damit das über die erste Leitung unter dem Saugdruck in das Behältnis strömende Wasser die Chemikalie nicht in ungebührendem Maße aufwirbelt, ist das Anschlussstück mit einem Diffusorteil versehen, der kleineren Querschnitt hat als das Behältnis im Bereich des Diffusorteils. Das aus der ersten Leitung austretende, unter Druck stehende Wasser trifft zunächst auf den Diffusorteil, über den es dann in das Behältnisinnere geleitet wird. Dies hat zur Folge, dass das Wasser nur gezielt auf die Chemikalie auftrifft, wodurch ein ungestörter Austrag der Chemikalie sichergestellt ist. Das Wasser strömt zwischen dem Diffusorteil und der Behältniswand nach unten in das Behältnisinnere.

Eine gleichmäßige Verteilung des aus der ersten Leitung austretenden Wassers wird in vorteilhafterweise erreicht, wenn der Diffusorteil kreisförmigen Umriss hat.

Die erste Leitung mündet mit Abstand vor dem Diffusorteil in die Umfangsfläche des Ansatzes. Der Diffusorteil stellt sicher, dass das Wasser gleichmäßig über den Umfang verteilt nach unten in die Chemikalie gelangt.

Damit die Chemikalie einwandfrei aus dem Behältnis ausgetragen werden kann, mündet die zweite Leitung in die Stirnseite des Ansatzes, der in das Innere des Behältnisses ragt.

An die zweite Leitung ist ein Saugschlauch angeschlossen, der bis zum Boden des Behältnisses reicht und über den die Chemikalie durch das unter Druck stehende Wasser herausgedrückt wird.

Damit ein maximal zulässiger Hydraulikdruck nicht überschritten wird, ist die Einheit vorteilhaft mit einem Druckbegrenzungsventil versehen, das an die Rohrkupplung anschließbar ist. Sollte der Druck im System den zulässigen Maximalwert überschreiten, stellt das Druckbegrenzungsventil sicher, dass der Wasserdruck nicht über den vorgegebenen Wert ansteigt.

Damit das Wasser mit der zugemischten Chemikalie nicht zurückgedrückt werden kann, ist die Einheit vorteilhaft mit einem Rückschlagventil versehen, das sich in Strömungsrichtung hinter dem Eintrag der Chemikalie in das die Rohrkupplung durchströmende Wasser befindet.

Damit die Chemikalie in der erforderlichen Menge zuverlässig dem die Rohrkupplung durchströmenden Wasser zugemischt werden kann, ist es vorteilhaft, den Querschnitt der zweiten Leitung durch wenigstens ein Dosierelement einzustellen. Hierfür eignet sich bevorzugt eine Dosierschraube, mit der der Durchströmquerschnitt der zweiten Leitung stufenlos feinfühlig eingestellt werden kann.

Beim erfindungsgemäßen Verfahren wird unmittelbar vor Beginn der Desinfektion und Reinigung der Desinfektions- und/oder Reinigungschemikalie wenigstens ein Nachweisindikator für die Chemikalie zugegeben. Mit ihr wird es dem Installateur erleichtert festzustellen, wann bei geöffneter Entnahmestelle das Wasser mit der Chemikalie austritt. Durch den Nachweisindikator erhält der Installateur eine eindeutige Anzeige, wann dies der Fall ist und er die Entnahmestelle schließen kann.

Da der Nachweisindikator erst unmittelbar vor Beginn der Desinfektion und/oder Reinigung zugegeben wird, ist vorteilhaft sichergestellt, dass der Nachweisindikator nicht frühzeitig zerstört wird. Üblicherweise wird für die Desinfektion bzw. Reinigung H2O2 eingesetzt, das sehr aggressiv reagiert und beigegebene andere Chemikalien mit der Zeit zerstören würde. Da der Nachweisindikator jedoch erst kurz vor dem Desinfektions-/Reinigungsvorgang zugegeben wird, ist gewährleistet, dass der Nachweisindikator während des Desinfektions-/Reinigungsprozesses nicht durch aggressive Chemikalien zersetzt wird.

Besonders vorteilhaft ist es für den Installateur, wenn als Nachweisindikator ein Farbstoff verwendet wird. Durch ihn wird das mit der Chemikalie versetzte Wasser eingefärbt, so dass der Installateur zuverlässig feststellen kann, wenn die Chemikalie beim Desinfektions-/Reinigungsprozess aus der geöffneten Entnahmestelle der Trinkwasserinstallation austritt und die Entnahmestelle dann geschlossen werden kann.

Der Nachweisindikator kann in flüssiger Form, aber auch in fester Form zugegeben werden, beispielsweise in Form von Granulat, Pulver, Tabletten und dergleichen.

Der Offenbarungsgegenstand ergibt sich nicht nur aus dem Gegenstand der einzelnen Patentansprüche, sondern auch durch alle in den Zeichnungen und der Beschreibung offenbarten Angaben und Merkmale.

Die Erfindung wird anhand eines in den Zeichnungen dargestellten Ausführungsbeispieles näher erläutert. Es zeigen
- Fig. 1: im Schnitt eine erfindungsgemäße Vorrichtung zum Desinfizieren und Reinigen,
- Fig. 2: in vergrößerter und perspektivischer Darstellung einen Durchflusskopf der erfindungsgemäßen Vorrichtung.

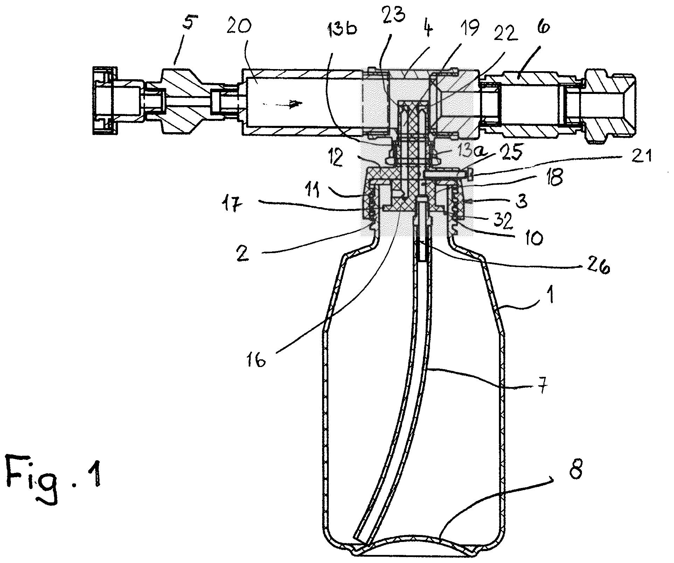

Die Vorrichtung wird bei der Desinfektion von Trinkwasserinstallationen eingesetzt. Bakterielle (mikrobielle) Verunreinigungen (Kontaminationen) und Ablagerungen in Trinkwasserinstallationen gefährden die Qualität des Trinkwassers. Mit Hilfe von Spülgeräten werden die Trinkwasserleitungen zur Desinfektion und Reinigung mit einer Flüssigkeit, in der Regel Wasser, durchspült, der eine Chemikalie zum Desinfizieren bzw. Reinigen zugesetzt ist. Sie befindet sich in einem Behältnis 1, auf dessen im Durchmesser verjüngten Hals 2 ein Durchflusskopf 3 aufgesetzt ist. Er ragt in eine Rohrkupplung, T-Stück 4, an dem der Durchflusskopf 3 befestigt wird. An das in Fig. 1 linke Ende des T-Stückes 4 ist ein Druckbegrenzungsventil 5 und an das rechte Ende ein Rückschlagventil 6 angeschlossen. Das Druckbegrenzungsventil 5 ist an eine Wasserleitung angeschlossen, über die Wasser zur Reinigung der Trinkwasserinstallation zugeführt wird. Das Wasser durchströmt das Druckbegrenzungsventil 5 und das Rückschlagventil 6. Das Wasser drückt unter Ausnutzung des Venturieffektes die Chemikalie aus dem Behältnis 1. Im Behältnis 1 befindet sich ein Saugschlauch 7, über den die Chemikalie dem Durchflusskopf 3 zugeführt wird.

Damit im Behältnis 1 nur eine sehr geringe Restmenge an Chemikalie verbleibt, ist der Boden 8 des Behältnisses 1 nach innen gewölbt ausgebildet. Der Saugschlauch 7, der flexibel ausgebildet ist, ist so lang, dass er bis in den Bereich neben dem gewölbten Boden 8 des Behältnisses 1 reicht.

Der Durchflusskopf 3 hat einen Halterungsteil 9, mit dem er auf dem Hals 2 des Behältnisses 1 sitzt. Vorteilhaft ist der Halterungsteil 9 zylindrisch ausgebildet und mit einem Innengewinde 10 versehen, mit dem der Halterungsteil 9 auf den mit einem Außengewinde 11 versehenden Hals 2 des Behältnisses geschraubt wird. Der Halterungsteil 9 ist ausreichend formsteif, so dass der Durchflusskopf 3 sicher auf den Hals 2 geschraubt werden kann. Abweichend vom dargestellten Ausführungsbeispiel kann der Halterungsteil 9 beispielhaft mit einem Schnappprofil versehen sein, mit dem er auf ein entsprechendes Gegenprofil am Hals 2 aufgeschnappt werden kann. Auch in diesem Falle ist der Verbindungsbereich zwischen dem Halterungsteil 9 und dem Hals 2 dicht ausgebildet, so dass keine Chemikalie aus dem Behältnis 1 unbeabsichtigt nach außen gelangen kann.

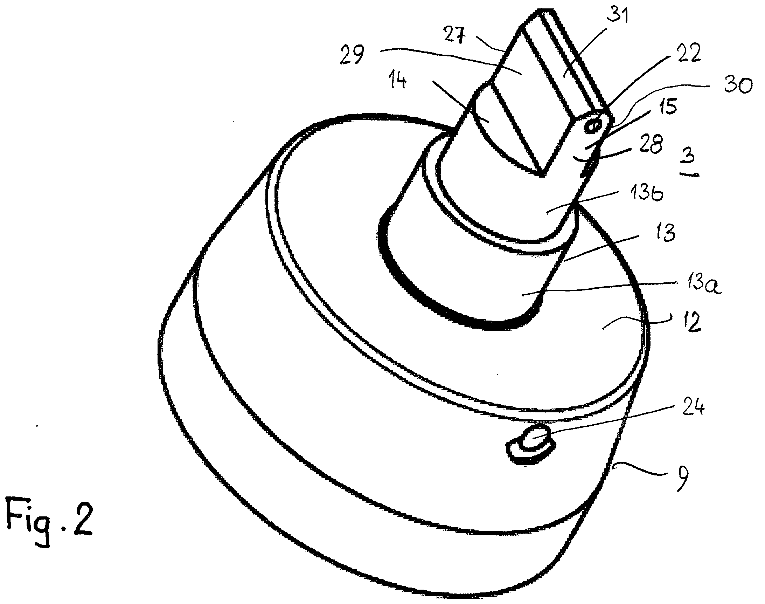

An den Halterungsteil schließt ein Boden 12 an, der scheibenförmig ausgebildet ist und von dem mittig ein Kopfstück 13 absteht, auf dem das T-Stück 4 sitzt. Das Kopfstück 13 hat, wie sich aus Fig. 2 ergibt, einen an den Boden 12 anschließenden mit einem Gewinde versehenen unteren Teil 13a, der über einen Absatz in einen im Durchmesser kleineren oberen Teil 13b übergeht. Der untere Teil 13a hat größere Wandstärke als der obere Teil 13b. Beide Teile 13a, 13b sind zylindrisch ausgebildet und haben jeweils kleineren Durchmesser als der Boden 12.

Das T-Stück 4 wird auf den unteren, in der Wandstärke dickeren Teil 13a mit Gewinde aufgeschraubt, wodurch eine sichere Befestigung des Behältnisses 1 am T-Stück 4 gewährleistet ist.

Von der vorteilhaft ebenen Stirnseite 14 des oberen Teils 13b steht ein Endteil 15 ab, der sich diametral bezüglich des oberen Teils 13b des Kopfstückes 13 erstreckt und stirnseitig geschlossen ist.

Von der Unterseite des Bodens 12 des Durchflusskopfes 3 steht mittig ein Ansatz 16 ab, der am freien Ende mit einer Diffusorscheibe 17 versehen ist. Sie ist als über den Umfang des Ansatzes 16 umlaufender Flansch ausgebildet. Vorteilhaft hat der Ansatz 16 kreisförmigen Querschnitt. In diesem Fall ist die Diffusorscheibe 17 ein Radialflansch mit kreisförmigem Umriss. Der Durchmesser der Diffusorscheibe 17 ist kleiner als der Innendurchmesser des Halses 2 des Behältnisses 1.

In die Mantelfläche 18 des Ansatzes 16 mündet mit axialem Abstand zur Diffusorscheibe 17 eine Bohrung d.h. erste Leitung 19. Sie erstreckt sich axial durch den Boden 12 und das Kopfstück 13 bis nahe an die Stirnseite des Endteils 15. Hier mündet die Bohrung 19 entgegen der Zuflussrichtung 20 des Wassers in die Seitenwand des Endteils 15.

In die Stirnseite des Ansatzes 16 mündet eine weitere Bohrung 21, die sich axial durch das Kopfstück 13 bis in den Endteil 15 erstreckt und dort in die Seitenwand des Endteiles 15 mündet. Die Austrittsöffnung 22 der Bohrung 21 liegt in Strömungsrichtung 20 vorhafterweise mittig zum Durchflussquerschnitt und vorteilhaft auf gleicher Höhe wie die Eintrittsöffnung 23 der Bohrung 19.

Durch den Boden 12 verläuft radial eine Bohrung 24, die ein Dosierelement 25 aufnimmt. Die Bohrung 24 erstreckt sich bis in die Bohrung 21 (Fig. 1). Vorteilhaft ist das Dosierelement 25 so lang, dass es bis in die Bohrung 21 reichen kann. Mit dem Dosierelement 25 kann der Durchflussquerschnitt für das Desinfektionsmittel durch die Bohrung 21 feinfühlig eingestellt werden.

Das in Fig. 1 untere Ende der Bohrung 21 ist im Durchmesser erweitert und nimmt ein Halteelement 26 auf, das als Durchlaufhülse ausgebildet und mit seinem erweiterten Kopf fest im Ansatz 16 gehalten ist. Auf das Halteelement 26 ist der flexible Saugschlauch 7 aufgeschoben.

Der Durchflusskopf 3 ist vorteilhaft einstückig aus Kunststoff hergestellt. Mit dem Halterungsteil 9 lässt sich der Durchflusskopf 3 einfach auf dem Behältnis 1 befestigen bzw. leicht von ihm abnehmen. In der Einbaulage ragt der Endteil 15 des Durchflusskopfes 13 bis vorteilhafterweise in die Mitte des Durchflussquerschnittes des T-Stückes 4. Dabei ist der Endteil 15 so ausgerichtet, dass er sich in Strömungsrichtung 20 des Wassers erstreckt. Es kann dadurch seitlich am Endteil 15 vorbeiströmen. Da der Endteil 15 in den Durchflussquerschnitt für das Wasser ragt, wird im Bereich dieses Endteiles ein Staudruck erzeugt. Er führt dazu, dass ein Teil des Wassers unter Druck über die Eintrittsöffnung 23 und die Bohrung 19 in das Behältnis 1 strömt und im Inneren des Behältnisses 1 ein Überdruck erzeugt wird. Dies hat zur Folge, dass die im Behältnis 1 befindliche Chemikalie in den Saugschlauch 7 gedrückt wird. Die Chemikalie gelangt dann über die Bohrung 21 und die Austrittsöffnung 22 in das durchströmende Wasser. Die Menge der zugeführten Chemikalie lässt sich mit dem Dosierelement 25 feinfühlig und genau einstellen, indem der Durchflussquerschnitt der Bohrung 21 entsprechend eingestellt wird.

Damit der Staudruck zuverlässig erzeugt wird, sind die beiden quer zur Strömungsrichtung 20 sich erstreckenden Stirnflächen des Endteiles 15 eben ausgebildet. Sie erstrecken sich senkrecht zur Durchflussrichtung und bieten damit dem zuströmenden Wasser einen hohen Widerstand. Die senkrecht an die Stirnflächen 27, 28 anschließenden Seitenflächen 29, 30, die sich in Strömungsrichtung 20 erstrecken, sind ebenfalls eben. Der Kopfbereich 31 des Endteiles 15 verjüngt sich in Richtung auf das freie Ende des Endteils 15.

Wenn das Wasser über die Bohrung 19 in das Behältnis 1 gedrückt wird, trifft es nach dem Austritt aus dem Ansatz 16 auf die Diffusorscheibe 17. Dadurch wird verhindert, dass das unter Druck stehende Wasser unkontrolliert in die Behältnischemikalie gelangt, wodurch der Austrag der Chemikalie über den Saugschlauch 7 beeinträchtigt werden könnte. Da sich die Diffusorscheibe 17 über den Umfang des Ansatzes 16 erstreckt, wird das Wasser über den Umfang gleichmäßig verteilt und in das Behälterinnere geleitet. Die Diffusorscheibe 17 hat einen solchen Durchmesser, dass zwischen ihrem Rand und der Innenwand des Halses 2 des Behältnisses 1 nur ein schmaler Ringspalt 32 verbleibt, was zur gleichmäßigen und beruhigten Zuführung des unter Druck stehenden Wassers beiträgt.

Damit unterschiedliche Vordrücke des Wasserzuflusses den Durchfluss am Durchflusskopf 3 vorbei nicht nachteilig beeinflussen, ist das Druckbegrenzungsventil 5 vorgesehen. Es stellt sicher, dass der Wasserdruck nicht über einen vorgegebenen Wert ansteigt und dadurch die Desinfektion bzw. Reinigung der Trinkwasserinstallation beeinträchtigt.

Das in Strömungsrichtung hinter dem Endteil 15 des Durchflusskopfes 3 liegende Rückschlagventil 6 stellt sicher, dass kein Trinkwasser aus der Trinkwasserinstallation zurück in die Wasserversorgung gedrückt wird.

Wie aus Fig. 1 hervorgeht, liegt der Endteil 15 des Durchflusskopfes 3 zwischen den beiden Ventilen 5, 6.

Die im Behältnis 1 befindliche Chemikalie ist vorteilhaft Wasserstoffperoxid H2O2. Mit ihr wird eine zuverlässige Desinfektion der Trinkwasserinstallation gewährleistet. Es ist vorgeschrieben, dass die Chemikalien in einer bestimmten Konzentration dem Trinkwasser zugemischt werden und nach einer bestimmten Einwirkungszeit aus den Trinkwasserleitungen wieder ausgespült werden müssen. Während des Füllvorganges werden alle Entnahmestellen an der Trinkwasserinstallation nacheinander so lange geöffnet, bis das Desinfektionsmittel an der jeweiligen Entnahmestelle austritt. Dann werden die Entnahmestellen wieder geschlossen, so dass das Desinfektionsmittel in der Trinkwasserleitung wirksam werden kann. Beispielsweise werden die Entnahmestellen 24 Stunden geschlossen, bevor sie wieder geöffnet werden. Dann müssen alle Entnahmestellen nacheinander so lange geöffnet werden, bis das Desinfektionsmittel nicht mehr feststellbar ist.

Damit zuverlässig und dennoch einfach festgestellt werden kann, ob das Desinfektionsmittel sich in allen Trinkwasserleitungen befindet, wird ihm vorteilhaft ein Farbstoff zugegeben, wenn der Desinfektionsvorgang gestartet wird. Da als Desinfektionsmittel in der Regel Wasserstoffperoxid H2O2 verwendet wird, dass gegenüber anderen Bestandteilen aggressiv ist und diese bei längerer Kontaktierung zerstört, wird durch die Zugabe des Farbstoffes erst kurz vor dem Desinfektionsvorgang sichergestellt, dass der Farbstoff durch das Wasserstoffperoxid H2O2 nicht zerstört wird. Der Installateur kann nunmehr an den jeweiligen Entnahmestellen sehr einfach feststellen, ob das Desinfektionsmittel durch die jeweilige Trinkwasserleitung geleitet worden ist. Sobald aus der Entnahmestelle die farbige Flüssigkeit austritt, hat der Installateur Gewissheit, dass die vor der Entnahmestelle befindlichen Trinkwasserleitungen mit dem Desinfektionsmittel in Berührung gekommen sind.

Da das Behältnis 1 einfach vom T-Stück 4 abgenommen werden kann, kann der Farbstoff problemlos vor dem Desinfektionsvorgang in das Behältnis 1 eingefüllt werden. Anschließend wird das Behältnis wieder angesetzt und der Desinfektionsvorgang gestartet.

Der Farbstoff kann flüssig sein, aber auch in fester Form, beispielsweise in Form von Tabletten, Pulver, Granulat und dergleichen vorliegen. Als Farbstoff kommen Farbstoffe in Betracht, die der Zersetzung durch Wasserstoffperoxid H202 möglichst lange Stand halten und das Gemisch aus Wasser und Chemikalie einfärben.

Anstelle eines Farbstoffes kann auch jeder andere geeignete Indikator eingesetzt werden, beispielsweise ein Geruchsstoff oder ein Indikator, der mittels Teststreifen oder eines Messinstrumentes an der Entnahmestelle einfach nachgewiesen werden kann. Wesentlich ist nur, dass der Installateur an der Entnahmestelle sicher feststellen kann, dass die Desinfektionslösung aus der jeweils geöffneten Entnahmestelle austritt. Dann ist sichergestellt, dass die zur Entnahmestelle führenden Leitungen mit dem Desinfektionsmittel in Kontakt gekommen sind.

Wenn das Behältnis 1 entleert ist, kann es gegen ein volles Behältnis 1 problemlos ausgetauscht werden. Auch ist es möglich, das Behältnis 1 erneut mit der entsprechenden Chemikalie zu befüllen.

Als Desinfektionsmittel kommen außer Wasserstoffperoxid H2O2 auch andere bekannte Chemikalien in Betracht, wie beispielsweise Natriumhypochlorit und Chlordioxid. Hierzu zählen Stoffe mit einer Chemical-Abstracts Service (CAS)- oder European Inventory of Existing Commercial Chemical Substances (EINECS) Nummer, der in Produktnormen spezifiziert ist und für Desinfektion eingesetzt wird. Die Desinfektionsmittel können bei herstellerspezifischen Zubereitungen oder Formulierungen weitere Stoffe enthalten. Der Anteil des Desinfektionsmittels hängt vom Einsatzfall und den jeweils anzuwendenden Vorschriften ab.

## Patentansprüche

1. Vorrichtung zur Desinfektion und Reinigung von Leitungen, insbesondere von Trinkwasserleitungen, mit wenigstens einem Behältnis (1) und einer Rohrkupplung (4), mit wenigstens einer Chemikalie, die in dem wenigstens einen Behältnis (1) untergebracht ist, das mit wenigstens einem Anschlussstück (3) derart in den Strömungsquerschnitt der Rohrkupplung (4) ragt, dass sich beim Durchströmen der Rohrkupplung (4) von einer Flüssigkeit in Strömungsrichtung (20) vor dem Anschlussstück (3) in der Rohrkupplung (4) ein Staudruck bildet, der über wenigstens eine erste Leitung (19) des Anschlussstückes (3) auf die Chemikalie im Behältnis (1) einen Druck ausübt, durch den die Chemikalie in wenigstens eine zweite Leitung (21) des Anschlussstückes (3) gedrückt wird und in Strömungsrichtung (20) hinter dem Anschlussstück (3) in die Rohrkupplung (4) austritt,
**dadurch gekennzeichnet, dass** das Anschlussstück (3) einen in das Behältnis (1) ragenden Diffusorteil (17) aufweist, der kleineren Querschnitt hat als das Behältnis (1) im Bereich des Diffusorteiles (17) und der am freien Ende eines in das Behältnis (1) ragenden Ansatzes (16) des Anschlussstückes (3) vorgesehen ist,
dass die erste Leitung (19) mit axialem Abstand zum Diffusorteil (17) in eine Mantelfläche (18) des Ansatzes (16) mündet,
dass die zweite Leitung (21) in die Stirnseite des Ansatzes (16) mündet, und
dass an die zweite Leitung (21) ein Saugschlauch (7) angeschlossen ist.

2. Vorrichtung nach Anspruch 1,
**dadurch gekennzeichnet, dass** das Anschlussstück (3) mit einem Endteil (15) in die Rohrkupplung (4) ragt, dessen Querschnitt kleiner als der Strömungsquerschnitt der Rohrkupplung (4) ist.

3. Vorrichtung nach Anspruch 1 oder 2,
**dadurch gekennzeichnet, dass** das Anschlussstück (3) einen Halterungsteil (9) aufweist, der auf einen Hals (2) des Behältnisses (1) aufsetzbar ist und vorteilhaft lösbar mit dem Hals (2) verbunden ist.

4. Vorrichtung nach Anspruch 3,
**dadurch gekennzeichnet, dass** der Halterungsteil (9) auf den Hals (2) des Behältnisses (1) aufschraubbar ist.

5. Vorrichtung nach einem der Ansprüche 1 bis 4,
**dadurch gekennzeichnet, dass** der Diffusorteil (17) kreisförmigen Umriss hat.

6. Vorrichtung nach einem der Ansprüche 1 bis 5,
**dadurch gekennzeichnet, dass** in Strömungsrichtung (20) vor dem Endteil (15) des Anschlussstückes (3) an die Rohrkupplung (4) ein Druckbegrenzungsventil (5) anschließbar ist.

7. Vorrichtung nach einem der Ansprüche 1 bis 6,
**dadurch gekennzeichnet, dass** in Strömungsrichtung (20) hinter dem Endteil (15) des Anschlussstückes (3) an die Rohrkupplung (4) ein Rückschlagventil (6) anschließbar ist.

8. Vorrichtung nach einem der Ansprüche 1 bis 7,
**dadurch gekennzeichnet, dass** der Querschnitt der zweiten Leitung (21) durch wenigstens ein Dosierelement (25), vorzugsweise eine Dosierschraube, einstellbar ist.

9. Verfahren zur Desinfektion und Reinigung von Leitungen, insbesondere Trinkwasserleitungen, unter Verwendung der Vorrichtung nach einem der Ansprüche 1 bis 8,
wobei unmittelbar vor Beginn der Desinfektion oder Reinigung der Desinfektion- oder Reinigungschemikalie wenigstens ein Nachweisindikator für die Chemikalie beigegeben wird, mit dem ein Austritt der Chemikalie aus der Leitung feststellbar ist.

10. Verfahren nach Anspruch 9,
**dadurch gekennzeichnet, dass** der Nachweisindikator ein Farbstoff ist.

11. Verfahren nach Anspruch 10,
**dadurch gekennzeichnet, dass** der Farbstoff in flüssiger oder fester Form zugegeben wird.

## Claims

1. A device for disinfecting and cleaning conduits, in particular potable water conduits, with at least one container (1) and a pipe coupling (4), with at least one chemical which is accommodated in the at least one container (1) at least one connecting piece (3) of which protrudes into the cross section of flow of the pipe coupling (4) in a manner such that, when a liquid flows through the pipe coupling (4), upstream of the connecting piece (3) in the direction of flow (20), a banking-up pressure forms in the pipe coupling (4) which exerts a pressure on the chemical in the container (1) via at least one first conduit (19) of the connecting piece (3), by means of which the chemical is forced into at least one second conduit (21) of the connecting piece (3) and escapes downstream of the connecting piece (3) in the direction of flow (20) into the pipe coupling (4),
**characterized in that** the connecting piece (3) comprises a diffuser portion (17) which protrudes into the container (1) and which has a smaller cross section than the container (1) in the region of the diffuser portion (17) and a free end which is provided with a projection (16) of the connecting piece (3) which protrudes into the container (1),
**in that** the first conduit (19) discharges into a lateral surface (18) of the projection (16) at an axial distance from the diffuser portion (17),
**in that** the second conduit (21) discharges into the front face of the projection (16), and
**in that** a suction tube (7) is connected to the second conduit (21).

2. The device as claimed in claim 1,
**characterized in that** the end portion (15) of the connecting piece (3) protrudes into the pipe coupling (4), and has a cross section which is smaller than the cross section of flow of the pipe coupling (4).

3. The device as claimed in claim 1 or claim 2,
**characterized in that** the connecting piece (3) comprises a retaining portion (9) which can be placed on a neck (2) of the container (1) and is advantageously releasably connected to the neck (2).

4. The device as claimed in claim 3,
**characterized in that** the retaining portion (9) can be screwed onto the neck (2) of the container (1).

5. The device as claimed in one of claims 1 to 4,
**characterized in that** the diffuser portion (17) has a circular contour.

6. The device as claimed in one of claims 1 to 5,
**characterized in that** a pressure relief valve (5) can be connected to the pipe coupling (4) upstream of the end portion (15) of the connecting piece (3) in the direction of flow (20).

7. The device as claimed in one of claims 1 to 6,
**characterized in that** a one-way valve (6) can be connected to the pipe coupling (4) downstream of the end portion (15) of the connecting piece (3) in the direction of flow (20) .

8. The device as claimed in one of claims 1 to 7,
**characterized in that** the cross section of the second conduit (21) can be adjusted by means of at least one dosing element (25), preferably a dosing screw.

9. A method for disinfecting and cleaning conduits, in particular potable water conduits, using the device as claimed in one of claims 1 to 8,
wherein, directly before commencing disinfection or cleaning, at least one tracing indicator for the chemical is added to the disinfecting or cleaning chemical, by means of which an escape of the chemical from the conduit can be ascertained.

10. The method as claimed in claim 9,
**characterized in that** the tracing indicator is a dye.

11. The method as claimed in claim 10,
**characterized in that** the dye is added in liquid or solid form.

## Revendications

1. Dispositif de désinfection et de nettoyage de tuyaux, en particulier de conduites d'eau potable, pourvu d'au moins un contenant (1) et d'un raccord de tube (4), avec au moins un produit chimique, qui est logé dans l'au moins un contenant (1), qui par au moins une pièce de raccord (3) saillit dans la section transversale d'écoulement du raccord de tube (4) de telle sorte que lors de la circulation à travers le raccord de tube (4) d'un liquide dans la direction d'écoulement (20), il se forme à l'avant de la pièce de raccord (3) dans le raccord de tube (4) une pression de refoulement qui par l'intermédiaire d'au moins un premier conduit (19) de la pièce de raccord (3) exerce sur le produit chimique dans le contenant (1) une pression par laquelle le produit chimique est poussé dans au moins un deuxième conduit (21) de la pièce de raccord (3) et s'échappe dans la direction d'écoulement (20) derrière la pièce de raccord (3) dans le raccord de tube (4),
**caractérisé en ce que** la pièce de raccord (3) comporte une partie diffuseur (17) saillant dans le contenant (1), qui dispose d'une section transversale inférieure à celle du contenant (1) dans la zone de la partie diffuseur (17) et qui est prévue sur l'extrémité libre d'un embout (16) de la pièce de raccord (3) saillant dans le contenant (1),
**en ce que** le premier conduit (19) débouche avec un écart axial par rapport à la partie diffuseur (17) dans une surface d'enveloppe (18) de l'embout (16),
**en ce que** le deuxième conduit (21) débouche dans la face frontale de l'embout (16) et
**en ce que** sur le deuxième conduit (21) est raccordé un flexible aspirant (7).

2. Dispositif selon la revendication 1,
**caractérisé en ce que** la pièce de raccord (3) saillit par une partie extrême (15) dans le raccord de tube (4) dont la section transversale est inférieure à la section transversale d'écoulement du raccord de tube (4).

3. Dispositif selon la revendication 1 ou 2,
**caractérisé en ce que** la pièce de raccord (3) comporte une pièce de fixation (9) qui est susceptible d'être emboîtée sur un col (2) du contenant (1) et qui est avantageusement assemblé de manière amovible avec le col (2).

4. Dispositif selon la revendication 3,
**caractérisé en ce que** la pièce de fixation (9) peut se visser sur le col (2) du contenant (1).

5. Dispositif selon l'une quelconque des revendications 1 à 4,
**caractérisé en ce que** la partie diffuseur (17) a un contour de forme circulaire.

6. Dispositif selon l'une quelconque des revendications 1 à 5,
**caractérisé en ce que** dans la direction d'écoulement (20), à l'avant de la partie extrême (15) de la pièce de raccord (3), un clapet de surpression (5) peut se connecter sur le raccord de tube (4).

7. Dispositif selon l'une quelconque des revendications 1 à 6,
**caractérisé en ce que** dans la direction d'écoulement (20), à l'arrière de la partie extrême (15) de la pièce de raccord (3), un clapet anti-retour (6) peut se connecter sur le raccord de tube (4).

8. Dispositif selon l'une quelconque des revendications 1 à 7,
**caractérisé en ce que** la section transversale du deuxième conduit (21) est réglable par au moins un élément doseur (25), de préférence une vis doseuse.

9. Procédé de désinfection et de nettoyage de telles conduites, notamment des conduites d'eau potable en utilisant le dispositif selon l'une quelconque des revendications 1 à 8,
lors duquel, directement avant le début de la désinfection ou du nettoyage, on ajoute au produit chimique désinfectant ou nettoyant au moins un indicateur de présence du produit chimique permettant de constater la sortie du produit chimique hors du conduit.

10. Procédé selon la revendication 9,
**caractérisé en ce que** l'indicateur de présence est un colorant.

11. Procédé selon la revendication 10,
**caractérisé en ce qu'**on ajoute le colorant sous forme liquide ou solide.
